# EUROPEAN PATENT APPLICATION

(11) **EP 4 535 602 A1**
(43) Date of publication of application: **09.04.2025**
(21) Application number: 23814719.3
(22) Date of filing: 21.03.2023
(51) Int. Cl.: H02J 7/00

(54) **POWER SUPPLY DEVICE**

(30) Priority: 31.05.2022 CN 202210610453
(71) Applicant: BYD Company Limited, Shenzhen, Guangdong 518118 (CN)
(72) Inventor: ZHANG, Ke, Shenzhen, Guangdong 518118 (CN); WU, Rongfang, Shenzhen, Guangdong 518118 (CN); WANG, Xi, Shenzhen, Guangdong 518118 (CN); GUO, Zizhu, Shenzhen, Guangdong 518118 (CN); PAN, Yi, Shenzhen, Guangdong 518118 (CN)
(74) Representative: Mathys & Squire
(86) International application number: PCT/CN2023/082700
(87) International publication number: WO 2023/231521

(57) **Abstract**

A power supply device, comprising a first battery cell and a second battery cell. It is defined that the ratio between first parameters of the two battery cells is greater than a first preset threshold and the ratio between second parameters of the two battery cells is greater than a second preset threshold, and the capacity of the first battery cell is greater than that of the second battery cell; the first battery cell and/or the second battery cell is controlled to discharge according to a preset rule, so that the first battery cell can discharge all the time, and the first battery cell and the second battery cell discharge together when the second battery cell needs to be introduced.

## Description

### CROSS-REFERENCE TO RELATED APPLICATIONS

The present disclosure claims priority to Chinese Patent Application No. 202210610453.0, filed on May 31, 2022 and entitled "POWER SUPPLY DEVICE". The entire content of the above-referenced application is incorporated herein by reference.

### FIELD

This present disclosure relates to the field of battery technologies, and specifically, to a power supply device.

### BACKGROUND

Currently, a lithium ion battery is the most widely used energy storage device in the field of new energy vehicles. In an electric vehicle, generally, hundreds of battery cells are connected in a serial-parallel manner to form a battery module or a power supply device, and are combined with management systems such as a battery management system (BMS) and a thermal management system (TMS) to provide output under different working conditions for the entire electric vehicle.

In the related art, the electric vehicle requires the power supply device to have significantly different output capabilities under the different working conditions. However, an inner part of the entire power supply device is generally formed by a single type of battery cells. In addition, battery-core sizes, mass-energy densities, volume-energy densities, power densities, and the like of this type of battery cells are often the same or similar. As a result, the current power supply device cannot satisfy an output requirement of the electric vehicle under the different working conditions.

### SUMMARY

A technical problem to be resolved in the present disclosure is: providing, for a problem that an existing power supply device cannot satisfy an output requirement of an electric vehicle under different working conditions, a method for controlling a power supply device.

To resolve the foregoing technical problem, the present disclosure provides a power supply device. The power supply device includes a first battery cell and a second battery cell. A ratio of a first parameter of the first battery cell to a first parameter of the second battery cell is greater than a first preset threshold, a ratio of a second parameter of the second battery cell to a second parameter of the first battery cell is greater than a second preset threshold, and the first preset threshold and the second preset threshold are greater than 1; and
a capacity of the first battery cell is greater than a capacity of the second battery cell, the first battery cell and/or the second battery cell discharges according to a preset rule.

The preset rule includes:
when a first preset condition is satisfied, only the first battery cell discharging a load;
when a second preset condition is satisfied, the first battery cell and the second battery cell discharging together; and
when a third preset condition is satisfied, the first battery cell charging the second battery cell and discharging the load.

In an example disclosed by the present disclosure, the first preset threshold and the second preset threshold are greater than or equal to 1.5.

In an example disclosed by the present disclosure, the first battery cell includes at least one first battery core, and the second battery cell includes at least one second battery core. The first battery core and the second battery core satisfy |V1-V2| > 0.1 *V1 or |V1-V2| > 0.1*V2.

A voltage of the first battery core is V1, and a voltage of the second battery core is V2.

In an example disclosed by the present disclosure, the first battery cell includes multiple first battery cores, the multiple first battery cores are of a first chemical system, the second battery cell includes multiple second battery cores, the multiple second battery cores are of a second chemical system, and the first chemical system and the second chemical system are different.

In an example disclosed by the present disclosure, the first battery cell is a lithium iron phosphate battery, and the second battery cell is a lithium manganese oxide battery.

In an example disclosed by the present disclosure, the first battery cell is a lithium iron phosphate-graphite battery, and the second battery cell is a lithium metal battery.

In an example disclosed by the present disclosure, the power supply device further includes a control circuit. Both the first battery cell and the second battery cell are connected to the control circuit, to externally output through the control circuit. The power supply device further includes a controller. The controller is connected to the control circuit, to control, through controlling the control circuit, the first battery cell and the second battery cell to discharge according to the preset rule.

In an example disclosed by the present disclosure, the control circuit includes a first switch tube, a second switch tube, and a first inductance.

A first positive output end of the first battery cell is connected to a second negative output end of the second battery cell, a first negative output end of the first battery cell is connected to a first end of the first switch tube and a load negative end, a second positive output end of the second battery cell is connected to a second end of the second switch tube and a load positive end, an end of the first inductance is connected to the first positive output end and the second negative output end, and another end of the first inductance is connected to a second end of the first switch tube and a first end of the second switch tube.

In an example disclosed by the present disclosure, when the first preset condition is satisfied, the controller controls on-duty cycles of the first switch tube and the second switch tube, and controls a voltage difference between the second positive output end and the second end of the second switch tube to be within a first preset range, to cause only the first battery cell to discharge the load;
when the second preset condition is satisfied, the controller controls the first switch tube and the second switch tube to be turned off, to cause the first battery cell and the second battery cell to discharge together;
when the third preset condition is satisfied, the controller controls on-duty cycles of the first switch tube and the second switch tube, and controls a voltage difference between the second positive output end and the second end of the second switch tube to be within a second preset range, to cause the first battery cell to charge the second battery cell and discharge the load; and
a maximum value of the first preset range is less than a minimum value of the second preset range.

In an example disclosed by the present disclosure, the power supply device includes multiple battery cells. One of the multiple battery cells is the first battery cell, and the rest of the multiple battery cells are the second battery cells; or one of the multiple battery cells is the second battery cell, and the rest of the multiple battery cells are the first battery cells;
or some of the multiple battery cells are the first battery cells, and the rest of the multiple battery cells are the second battery cells.

In an example disclosed by the present disclosure, the first parameter is a capacity, and a ratio of a first capacity of the first battery cell to a second capacity of the second battery cell is greater than the first preset threshold; and
the second parameter is a maximum rated pulse discharge rate, and a ratio of a maximum rated pulse discharge rate of the second battery cell to a maximum rated pulse discharge rate of the first battery cell is greater than the second preset threshold.

In an example disclosed by the present disclosure, the first preset condition is that a required power of the load is less than a power outputted by the first battery cell at the maximum rated pulse discharge rate, and/or a state of charge of the first battery cell is greater than a state of charge of the second battery cell and the state of charge of the second battery cell is less than a third preset threshold;
the second preset condition is that the required power of the load is greater than the power outputted by the first battery cell at the maximum rated pulse discharge rate, and/or the state of charge of the first battery cell and the state of charge of the second battery cell are greater than a fourth preset threshold, and/or the state of charge of the first battery cell and the state of charge of the second battery cell are less than a fifth preset threshold; and
the third preset condition is that the state of charge of the first battery cell is greater than the state of charge of the second battery cell, and a difference between the state of charge of the first battery cell and the state of charge of the second battery cell is greater than a sixth preset threshold.

The maximum rated pulse discharge rate is a maximum discharge rate causing a voltage of the first battery cell or a voltage of the second battery cell to drop to a cut-off voltage within 10s.

Beneficial effects according to the present disclosure are as follows: The power supply device includes the first battery cell and the second battery cell. By defining the ratio between the first parameters of the two battery cells to be greater than the first preset threshold, the ratio between the second parameters to be greater than the second preset threshold, and the capacity of the first battery cell to be greater than the capacity of the second battery cell, and by controlling the first battery cell and/or the second battery cell to discharge according to the preset rule, the first battery cell can always externally discharge and discharge together with the second battery cell when the second battery cell needs to be introduced, to ensure that the power supply device can satisfy the output requirement of the electric vehicle under the different working conditions, to improve output efficiency of the power supply device.

### BRIEF DESCRIPTION OF THE DRAWINGS

FIG. 1 is a schematic diagram of a power supply device according to an example of the present disclosure; and
FIG. 2 is a circuit diagram of a power supply device according to an example of the present disclosure.

In the drawings in the specification:
101: first battery cell; 1011: first positive output end; 1012: first negative output end; 102: second battery cell; 1021: second positive output end; 1022: second negative output end; 103: control circuit; 1031: first switch tube; 10311: first end of the first switch tube; 10312: second end of the first switch tube; 1032: second switch tube; 10321: first end of the second switch tube; 10322: second end of the second switch tube; 1033: first inductance; 104: load; 1041: load positive end; 1042: load negative end; and 105: controller.

### DETAILED DESCRIPTION

Examples of the present disclosure are described in detail below, and illustrations of the examples are shown in the drawings, where the same or similar elements or the elements having same or similar functions are denoted by the same or similar reference numerals throughout the description. The examples described below with reference to the drawings are illustrative, and are intended to explain the present disclosure and cannot be construed as a limitation to the present disclosure.

In the related art, an electric vehicle requires a power supply device to have significantly different output capabilities under different working conditions. However, the entire power supply device generally includes only a single type of battery cells. Battery-core sizes, mass-energy densities, volume-energy densities, power densities, and the like of this type of battery cells are often the same or similar. As a result, the current power supply device cannot satisfy an output requirement of the electric vehicle under the different working conditions. For example, only power output of about 10 KW to 20 KW is required when the electric vehicle travels smoothly. However, power input or output of up to 50 kilowatts to hundreds of kilowatts is generally required when the electric vehicle accelerates, decelerates, or recovers braking energy. If the power supply device includes only a single type of battery cores, only that the electric vehicle runs steadily under one working condition can be ensured.

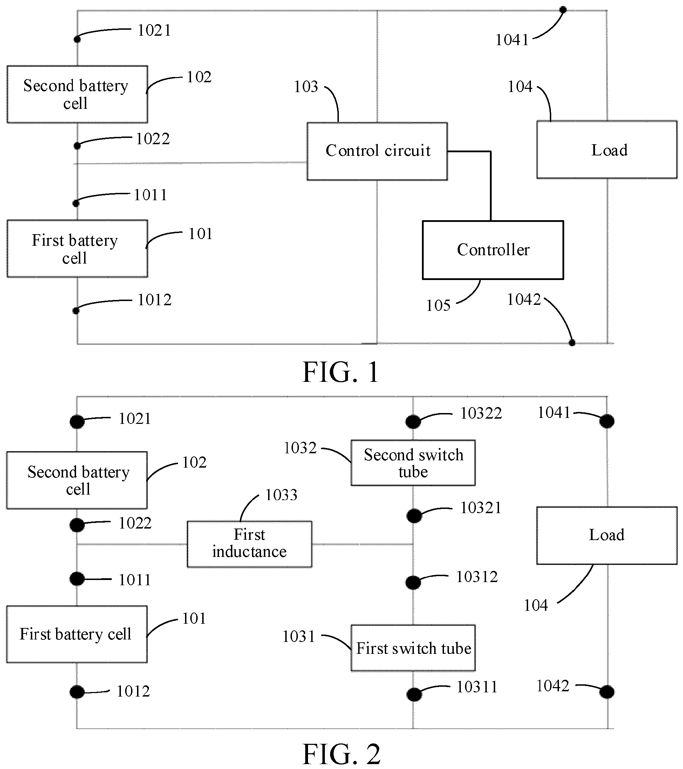

Based on this, a power supply device is disclosed in the examples of the present disclosure. The power supply device is configured to supply power to a load 104. FIG. 1 is a schematic diagram of a power supply device according to an example of the present disclosure. The power supply device includes a first battery cell 101 and a second battery cell 102. A ratio of a first parameter of the first battery cell 101 to a first parameter of the second battery cell 102 is greater than a first preset threshold, a ratio of a second parameter of the second battery cell 102 to a second parameter of the first battery cell 101 is greater than a second preset threshold, and the first preset threshold and the second preset threshold are greater than 1. Specifically, the first battery cell 101 has a great advantage in terms of performance corresponding to the first parameter; while the second battery cell 102 has a great advantage in terms of performance corresponding to the second parameter. Based on this, in an entire vehicle, under a working condition requiring a great advantage in the first parameter, the first battery cell 101 may be selected for external output; and under a working condition requiring a great advantage in the second parameter, the second battery cell 102 may be selected for external output. There is a specified proportional relationship between the two sets of parameters of the first battery cell 101 and the second battery cell 102 in the power supply device, ensuring that the first battery cell 101 and the second battery cell 102 can satisfy an output requirement of the entire vehicle under different working conditions of the entire vehicle, to improve adaptability of the power supply device to the working conditions of the entire vehicle. In addition, the power supply device includes the first battery cell 101 and the second battery cell 102 that have different parameters. Therefore, for multiple power supply devices in the entire vehicle, a difference between different power supply devices can be greatly reduced, a standardized design of the power supply device can be achieved, and costs of the power supply device can also be greatly reduced.

In this example of the present disclosure, the power supply device is a device, for example, a battery pack, that provides electrical energy to the entire vehicle or a component such as a controller of the entire vehicle. The first battery cell 101 and the second battery cell 102 may be entire battery packs, or may be battery modules. This is not limited in the present disclosure.

Specifically, in this example of the present disclosure, the first parameter is a capacity, and a ratio of a first capacity of the first battery cell 101 to a second capacity of the second battery cell 102 is greater than the first preset threshold. The second parameter is a maximum rated pulse discharge rate, and a ratio of a maximum rated pulse discharge rate of the second battery cell 102 to a maximum rated pulse discharge rate of the first battery cell 101 is greater than the second preset threshold. The maximum rated pulse discharge rate is a maximum discharge rate causing a voltage of a battery to drop to a cut-off voltage within 10s. Based on the foregoing parameter definition, the first battery cell 101 is configured to perform main output, to be specific, continuous demand for power of the entire vehicle is ensured by using an advantage of a large capacity of the first battery cell 101. The second battery cell 102 is configured to, when demand of the entire vehicle for a high power is satisfied, cooperate with the first battery cell to output, to be specific, high-speed and high-energy operation of the entire vehicle is ensured by using an advantage of a large maximum rated pulse discharge rate of the second battery cell 102.

In another example of the present disclosure, the first parameter may be an energy density, and the second parameter may be a cycle life or a quantity of cycles, to cause the first battery cell 101 to satisfy demand for high-efficiency output of the entire vehicle, and the second battery cell 102 to satisfy long-range endurance of the entire vehicle. In another example of the present disclosure, the first parameter may be the capacity, and the second parameter may be a cycle life, to cause the first battery cell 101 to satisfy the continuous demand for power of the entire vehicle, and the second battery cell 102 to satisfy long-range endurance of the entire vehicle.

In an example of the present disclosure, when a capacity of the first battery cell 101 is greater than a capacity of the second battery cell 102, the first battery cell 101 and/or the second battery cell 102 discharges according a preset rule. Specifically, the preset rule includes three work modes, specifically as follows:
Work mode 1: when a first preset condition is satisfied, only the first battery cell 101 discharges a load 104.
Work mode 2: when a second preset condition is satisfied, the first battery cell 101 and the second battery cell 102 discharge together.
Work mode 3: when a third preset condition is satisfied, the first battery cell 101 charges the second battery cell 102 and discharges the load 104.

Based on the foregoing example, for the entire vehicle, the power supply device needs to always respond to the demand for power of the entire vehicle. Based on this, the capacity of the first battery cell 101 is required to be greater than the capacity of the second battery cell 102, to cause that the first battery cell 101 can always ensure external output, to satisfy most of the demand for power of the entire vehicle. Once the entire vehicle has special demand, such as demand for high speed, low speed, or energy recovery, the entire vehicle selects to introduce the second battery cell 102 to satisfy the special demand above, thereby satisfying demand of the entire vehicle under the different working conditions.

The first battery cell 101 and the second battery cell 102 each have their own advantageous characteristics, and the power supply device can select, based on the advantageous characteristics, a corresponding battery cell for output, to satisfy the output requirement of the entire vehicle under the different working conditions.

When the power supply device is in the work mode 1, the power supply device discharges the load 104 by using only the first battery cell 101. The load 104 may be a component such as a motor, an electronic control, or a controller of the entire vehicle. The first preset condition is generally normal demand of the entire vehicle. In other words, compared with the second battery cell 102, the first battery cell 101 having a great advantage in the first parameter can satisfy the normal demand of the entire vehicle. For example, in an example of the present disclosure, the first preset condition may be that the entire vehicle is traveling at a normal speed or traveling smoothly. When the first preset condition is satisfied, the entire vehicle does not need to change the speed of the entire vehicle or a change in the speed of the entire vehicle is small. In this case, in the power supply device in the entire vehicle, only the first battery cell 101 with a large capacity needs to externally supply power to satisfy the demand for power of the entire vehicle. For another example, in another example of the present disclosure, the first preset condition may further be that when the entire vehicle needs to be powered continuously and normally, the entire vehicle needs to be continuously powered by the power supply device, and a power supply current remains unchanged or is in a stable stage. In this case, in the power supply device in the entire vehicle, only the first battery cell 101 with the large capacity needs to externally supply power to satisfy the demand for power of the entire vehicle. In other words, under the first preset condition, the entire vehicle has the highest demand for power in an entire life cycle. In this case, it is only necessary to ensure that a battery cell with a large capacity can supply power to the entire vehicle.

In an example of the present disclosure, the first preset condition is that a required power of the load 104 is less than a power outputted by the first battery cell 101 at the maximum rated pulse discharge rate. Under this condition, a required power of the entire vehicle is less than a discharge power of the first battery cell 101, and the first battery cell 101 can externally output to satisfy the normal demand of the entire vehicle. In addition/alternatively, the first preset condition may further be that a state of charge (SOC) of the first battery cell 101 is greater than an SOC of the second battery cell 102, and the SOC of the second battery cell 102 is less than a third preset threshold. Under this condition, the SOC of the second battery cell 102 cannot satisfy an external output requirement, so that only the first battery cell 101 needs to externally output. The third preset threshold is generally 30% SOC, optionally 20% SOC. However, because different users have different definition requirements for the SOC, the third preset threshold may be selected according to an actual case. This is not limited in the present disclosure.

When the power supply device is in the work mode 2, in this case, the first battery cell 101 and the second battery cell 102 discharge together. Generally, the second preset condition is the special demand of the entire vehicle. In other words, compared with the first battery cell 101, the second battery cell 102 having a great advantage in the second parameter can satisfy the special demand of the entire vehicle. For example, in a case that the entire vehicle accelerates, decelerates, or recovers braking energy, the entire vehicle not only needs normal power supply, but also needs to satisfy demand under special working conditions such as acceleration and deceleration. Based on this, in the power supply device, the first battery cell 101 needs to discharge, and the second battery cell 102 also needs to discharge, to satisfy the demand for power of the entire vehicle together under the working condition. In addition, because a ratio of the first parameter of the first battery cell 101 to the second parameter of the first battery cell 101 is different from a ratio of the first parameter of the second battery cell 102 to the second parameter of the second battery cell 102, the second battery cell 102 can satisfy the demand for power when the entire vehicle has the special demand.

In an example of the present disclosure, the second preset condition is that the required power of the load 104 is greater than the power outputted by the first battery cell 101 at the maximum rated pulse discharge rate. Under this condition, because the required power of the entire vehicle is higher than an output power of the first battery cell 101, only output of the first battery cell 101 cannot satisfy power demand of the entire vehicle. Based on this, the first battery cell 101 and the second battery cell 102 need to output together, to cause the second battery cell 102 to increase an overall output power of the power supply device to satisfy high power demand of the entire vehicle. In addition/alternatively, the second preset condition may further be that the SOC of the first battery cell 101 and the SOC of the second battery cell 102 are greater than a fourth preset threshold. Under this condition, it can be ensured that the first battery cell 101 and the second battery cell 102 have enough energy to externally output, so that it can be ensured that the first battery cell 101 and the second battery cell 102 externally output together. The fourth preset threshold is generally 70% SOC, optionally 80% SOC. However, because different users have different definition requirements for the SOC, the fourth preset threshold may be selected according to an actual case. This is not limited in the present disclosure. In addition/alternatively, the SOC of the first battery cell 101 and the SOC of the second battery cell 102 are less than a fifth preset threshold. Under this condition, the first battery cell 101 and the second battery cell 102 cannot externally output alone. In this case, the first battery cell 101 and the second battery cell 102 need to output together. The fifth preset threshold is generally 30% SOC. However, because different users have different definition requirements for the SOC, the fifth preset threshold may be selected according to an actual case. This is not limited in the present disclosure.

when the power supply device is in the work mode 3, in this case, the first battery cell 101 charges the second battery cell 102 and discharges the load 104. In this work mode, when the third preset condition is generally that the SOC of the first battery cell 101 and the SOC of the second battery cell 102 greatly differ and need to be balanced, the first battery cell 101 with a large capacity is used to charge the second battery cell 102, to achieve balance between batteries. In addition, in this work mode, the first battery cell 101 may still discharge the load 104 to satisfy basic demand of the entire vehicle.

In an example of the present disclosure, the third preset condition is that the SOC of the first battery cell 101 is greater than the SOC of the second battery cell 102, and a difference between the SOC of the first battery cell 101 and the SOC of the second battery cell 102 is greater than a sixth preset threshold. The sixth preset threshold is generally 30% SOC, optionally 50% SOC. However, because different users have different definition requirements for the SOC, the sixth preset threshold may be selected according to an actual case. This is not limited in the present disclosure.

Furthermore, in the examples of the present disclosure, the preset threshold is greater than or equal to 1.5. When the ratio of the first parameter of the first battery cell 101 to the first parameter of the second battery cell 102 and the ratio of the second parameter of the second battery cell 102 to the second parameter of the first battery cell 101 are greater than 1.5 or more, it can be ensured that a large difference exists between the first battery cell 101 and the second battery cell 102, to better satisfy the output requirement of the entire vehicle under the different working conditions.

In the examples of the present disclosure, the first battery cell 101 includes at least one first battery core, and the second battery cell 102 includes at least one second battery core. The first battery core and the second battery core satisfy |V1-V2| > 0.1*V1 or |V1-V2| > 0.1*V2. A voltage of the first battery core is V1, and a voltage of the second battery core is V2. Based on the foregoing condition, it can be further ensured that the large difference exists between the first battery cell 101 and the second battery cell 102, to better satisfy the output requirement of the entire vehicle under the different working conditions. Specifically, if a voltage difference between the battery cores in the two battery cells is less than 0.1 times the voltage of the battery core, it indicates that there is no obvious difference in the voltage between the first battery core and the second battery core. The battery cores without obvious difference indicate that the two battery cores have the same capacity. In this case, there is no obvious difference between the first battery cell 101 and the second battery cell 102 that have a same capacity, and the requirement of the entire vehicle under the different working conditions cannot be satisfied.

In the examples of the present disclosure, the first battery cell 101 includes multiple first battery cores, the multiple first battery cores are of a first chemical system, the second battery cell 102 includes multiple second battery cores, the multiple second battery cores are of a second chemical system, and first chemical system and the second chemical system are different. Based on the foregoing condition, it can be further ensured that the large difference exists between the first battery cell 101 and the second battery cell 102, to better satisfy the output requirement of the entire vehicle under the different working conditions. Specifically, battery cores of different chemical systems have different characteristics, for example, have different capacities or different discharge rates. It is ensured, based on unique characteristics of different chemical systems, that the output requirement of the entire vehicle under the different working conditions is satisfied. In an example of the present disclosure, a capacity of a lithium iron phosphate battery is generally higher than a capacity of a lithium manganese oxide battery, but a discharge rate of the lithium manganese oxide battery is higher than that of the lithium iron phosphate battery. Based on this, the lithium iron phosphate battery may be used as the first battery cell 101 to continuously and externally output, while the lithium manganese oxide battery may be used as the second battery cell 102, to be introduced when the entire vehicle needs high-rate output, to satisfy a requirement such as acceleration that requires high-rate output. In another example of the present disclosure, a cycle life of a lithium iron phosphate-graphite battery is higher than a cycle life of a ternary material-lithium metal battery, but an energy density of the ternary material-lithium metal battery is much higher than that of the lithium iron phosphate-graphite battery. Based on this, the lithium iron phosphate-graphite battery may be used as the first battery cell 101 to efficiently output, while the lithium metal battery may be used as the second battery cell 102, to be introduced when the entire vehicle needs long-range endurance (in other words, when the SOC of the first battery cell 101 is low), to satisfy a requirement of endurance mileage.

In the examples of the present disclosure, the first battery cell 101 and the second battery cell 102 are connected in series. In the work mode 2, the first battery cell 101 and the second battery cell 102 are connected in series and discharge together.

In the examples of the present disclosure, the power supply device further includes a control circuit 103. Both the first battery cell 101 and the second battery cell 102 are connected to the control circuit 103, to externally output through the control circuit 103. The power supply device further includes a controller 105. The controller 105 is connected to the control circuit 103, to control, through controlling the control circuit 103, the first battery cell 101 and the second battery cell 102 to discharge according to the preset rule. Specifically, as shown in FIG. 1, a first positive output end 1011 of the first battery cell 101 is connected to a second negative output end 1022 of the second battery cell 102, a first negative output end 1012 of the first battery cell 101 is connected to a first end of the control circuit 103 and a load negative end 1042, a second positive output end 1021 of the second battery cell 102 is connected to a second end of the control circuit 103 and a load positive end 1041, and a third end of the control circuit 103 is connected to the first positive output end 1011 and the second negative output end 1022. In the examples of the present disclosure, the controller 105 controls conduction and to switch on of the control circuit 103 to adjust the work mode of the power supply device. Specifically, when the first preset condition is satisfied, the controller 105 controls an on-duty cycle of the control circuit 103 and adjust a voltage difference between the second positive output end 1021 of the second battery cell 102 and the second end of the control circuit 103 to be within a first preset range, thereby ensuring that only the first battery cell 101 outputs. When the second preset condition is satisfied, the controller 105 controls the control circuit 103 to be disconnected, to cause the first battery cell 101 and the second battery cell 102 to be connected in series and output together. When the third preset condition is satisfied, the controller 105 controls an on-duty cycle of the control circuit 103 and adjust a voltage difference between the second positive output end 1021 of the second battery cell 102 and the second end of the control circuit 103 to be within a second preset range, thereby causing the first battery cell 101 to charge the second battery cell 102 and externally output.

Furthermore, as shown in FIG. 2, The control circuit 103 includes a first switch tube 1031, a second switch tube 1032, and a first inductance 1033. The first positive output end 1011 of the first battery cell 101 is connected to the second negative output end 1022 of the second battery cell 102, the first negative output end 1012 of the first battery cell 101 is connected to a first end 10311 of the first switch tube and the load negative end 1042, the second positive output end 1021 of the second battery cell 102 is connected to a second end 10322 of the second switch tube and the load positive end 1041, an end of the first inductance 1033 is connected to the first positive output end 1011 and the second negative output end 1022, and another end of the first inductance 1033 is connected to a second end 10312 of the first switch tube and a first end 10321 of the second switch tube. In addition, an MOS tube, an IGBT, and the like are generally selected as the first switch tube 1031 and the second switch tube 1032. Selection of the switch tube is not limited in the present disclosure.

In this case, the work mode 1 is that when the first preset condition is satisfied, the controller 105 controls on-duty cycles of the first switch tube 1031 and the second switch tube 1032, and controls a voltage difference between the second positive output end 1021 and the second end 10322 of the second switch tube to be within the first preset range, to cause only the first battery cell 101 to discharge the load 104. Specifically, the first preset range is between 0.1 V and 1 V. The foregoing working principle is as follows: When the first switch tube 1031 and the second switch tube 1032 are turned on and off, by controlling a duty cycle, the first inductance 1033 stores a specified amount of charge, so that a voltage at the first end 10321 of the second switch tube is a superimposed voltage of the first inductance 1033 and the first battery cell 101. Because the second switch tube 1032 is turned on, a voltage at the second end 10322 of the second switch tube is consistent with the voltage at the first end 10321 of the second switch tube, and is also the superimposed voltage of the first inductance 1033 and the first battery cell 101. In addition, a voltage at the second positive output end 1021 of the second battery cell 102 is a sum of voltages of the second battery cell 102 and the first battery cell 101. Based on this, as long as it is ensured that the voltage at the second end 10322 of the second switch tube is greater than the voltage at the second positive output end 1021 of the second battery cell 102, it may be ensured that the second battery cell 102 does not externally output, in other words, the superimposed voltage of the first inductance 1033 and the first battery cell 101 is greater than a superimposed voltage of the second battery cell 102 and the first battery cell 101. In addition, if a voltage difference between the superimposed voltage of the first inductance 1033 and the first battery cell 101 and the superimposed voltage of the second battery cell 102 and the first battery cell 101 is within the first preset range, because a difference between the two is not large, the first battery core only externally discharges and does not charge the second battery core.

In this case, the work mode 2 is that the controller 105 controls the first switch tube 1031 and the second switch tube 1032 to be turned off, to cause the first battery cell 101 and the second battery cell 102 to be connected in series and discharge together.

In this case, the work mode 3 is that the controller 105 controls on-duty cycles of the first switch tube 1031 and the second switch tube 1032, and controls a voltage difference between the second positive output end 1021 and the second end 10322 of the second switch tube to be within the second preset range, to cause the first battery cell 101 to charge the second battery cell 102 and discharge the load 104. Furthermore, the second preset range is above 1 V. In addition, a working principle in the work mode 3 is the same as the foregoing working principle, as long as it is ensured that the voltage difference between the superimposed voltage of the first inductance 1033 and the first battery cell 101 and the superimposed voltage of the second battery cell 102 and the first battery cell 101 is within the second preset range. In this case, because the superimposed voltage of the first inductance 1033 and the first battery cell 101 is greater than the superimposed voltage of the second battery cell 102 and the first battery cell 101, the first battery cell 101 charges the second battery cell 102 and can externally discharge.

In the examples of the present disclosure, the power supply device includes multiple battery cells, and the same battery cells can be connected in series, in parallel, in parallel first and then in series, or in series first and then in parallel. A specific connection manner is not limited in the present disclosure. In addition, one battery cell may include multiple battery cores, and may alternatively have just one battery core. When the battery cell includes multiple battery cores, capacities of the battery cores located in a same group are approximately equal or the same, and chemical systems of the battery cores are consistent. For example, the battery cell includes six battery cores, a capacity of each battery core is 100 AH, and a chemical system of each battery core is lithium iron phosphate.

In an example of the present disclosure, one of the multiple battery cells is the first battery cell 101, and the rest of the multiple battery cells are the second battery cells 102. In addition, a ratio of a first parameter of a battery core of a battery cell in the first battery cell 101 to a first parameter of a battery core of any battery cell in the second battery cell 102 is to be greater than a preset threshold; and a ratio of a second parameter of the battery core of any battery cell in the second battery cell 102 to a second parameter of the battery core of the battery cell in the first battery cell 101 is to be greater than the preset threshold. In addition, a capacity of the battery core in the first battery cell 101 is to be greater than a sum of capacities of all battery cores in the second battery cell 102, to ensure a subsequent work mode.

In another example of the present disclosure, one of the multiple battery cells is the second battery cell 102, and the rest of the multiple battery cells are the first battery cells 101. In this example, a ratio of a first parameter of a battery core of each battery cell in the first battery cell 101 to a first parameter of a battery core of a battery cell in the second battery cell 102 is to be greater than a preset threshold; and a ratio of a second parameter of the battery core of battery cell in the second battery cell 102 to a second parameter of the battery core of each battery cell in the first battery cell 101 is to be greater than the preset threshold. In addition, a sum of capacities of all the battery cores in the first battery cell 101 is to be greater than a capacity of the battery core in the second battery cell 102, to ensure a subsequent work mode.

In another example of the present disclosure, some of the multiple battery cells are the first battery cells 101, and the rest of the multiple battery cells are the second battery cells 102. In this example, a ratio of a first parameter of a battery core of each battery cell in the first battery cell 101 to a first parameter of a battery core of each battery cell in the second battery cell 102 is to be greater than a preset threshold; and a ratio of a second parameter of a battery core in each battery cell in the second battery cell 102 to a second parameter of a battery core in each battery cell in the first battery cell 101 is to be greater than the preset threshold. In addition, a sum of capacities of all the battery cores in the first battery cell 101 is to be greater than a sum of capacities of all the battery cores in the second battery cell 102, to ensure a subsequent work mode.

In an example of the present disclosure, the first parameter is a capacity, and a ratio of a first capacity of the first battery cell 101 to a second capacity of the second battery cell 102 is greater than the preset threshold. The second parameter is a maximum rated pulse discharge rate, and a ratio of a maximum rated pulse discharge rate of the second battery cell 102 to a maximum rated pulse discharge rate of the first battery cell 101 is greater than the second preset threshold. The maximum rated pulse discharge rate is a maximum discharge rate causing a voltage of a battery to drop to a cut-off voltage within 10s. Based on the foregoing parameter definition, the first battery cell 101 is an energy pack, and the second battery cell 102 is a power pack. Specifically, a capacity of the energy pack is greater than a capacity of the power pack, so that the entire vehicle mainly uses the energy pack for output. A maximum rated pulse discharge rate of the power pack is greater than a maximum rated pulse discharge rate of the energy pack, to ensure that normally when large-power output is required, the power pack can be introduced to ensure high-power output of the entire vehicle.

Specifically, in an example of the present disclosure, when a high SOC and a low power are satisfied, the power supply device enters the work mode 1, in other words, only the energy pack outputs. The first preset condition is that a required power of the load 104 is less than a power outputted by the first battery cell 101 at the maximum rated pulse discharge rate. Under this condition, a required power of the entire vehicle is less than a discharge power of the first battery cell 101, and the first battery cell 101 can externally output to satisfy the normal demand of the entire vehicle. Alternatively, the first preset condition may further be that under requirement of the foregoing power condition, the SOC of the first battery cell 101 is greater than the SOC of the second battery cell 102 and the SOC of the second battery cell 102 is less than the third preset threshold. Alternatively, the first preset condition may further be that the SOC of the first battery cell 101 is greater than the SOC of the second battery cell 102 and the SOC of the second battery cell 102 is less than the third preset threshold. Under this condition, the SOC of the second battery cell 102 cannot satisfy an external output requirement, so that only the first battery cell 101 needs to externally output. The third preset threshold is generally 30% SOC, optionally 20% SOC. However, because different users have different definition requirements for the SOC, the third preset threshold may be selected according to an actual case. This is not limited in the present disclosure.

In an example of the present disclosure, when a high SOC and a high power are satisfied, the power supply device enters the work mode 2, in other words, the energy pack and the power pack are connected in series and externally output together. The second preset condition is that a required power of the load 104 is greater than a power outputted by the first battery cell 101 at the maximum rated pulse discharge rate. Under this condition, because the required power of the entire vehicle is higher than an output power of the first battery cell 101, output of the first battery cell 101 alone cannot satisfy power demand of the entire vehicle. Based on this, the first battery cell 101 and the second battery cell 102 need to output together, to cause the second battery cell 102 to increase an overall output power of the power supply device, thereby satisfying high power demand of the entire vehicle. In addition/alternatively, the second preset condition may further be that the SOC of the first battery cell 101 and the SOC of the second battery cell 102 are greater than a fourth preset threshold. Under this condition, it can be ensured that the first battery cell 101 and the second battery cell 102 have enough energy to externally output, so that it can be ensured that the first battery cell 101 and the second battery cell 102 externally output together. The fourth preset threshold is generally 70% SOC, optionally 80% SOC. However, because different users have different definition requirements for the SOC, the fourth preset threshold may be selected according to an actual case. This is not limited in the present disclosure. In addition/alternatively, the SOC of the first battery cell 101 and the SOC of the second battery cell 102 are less than a fifth preset threshold. Under this condition, the first battery cell 101 and the second battery cell 102 cannot externally output alone, so that the first battery cell 101 and the second battery cell 102 need to output together. The fifth preset threshold is generally 30% SOC. However, because different users have different definition requirements for the SOC, the fifth preset threshold may be selected according to an actual case. This is not limited in the present disclosure.

In an example of the present disclosure, when a difference between an SOC of the energy pack and an SOC of the power pack is too large, the work mode 3 is entered, in other words, the energy pack charges the power pack to achieve balance between the energy pack and the power pack. The third preset condition is that the SOC of the first battery cell 101 is greater than the SOC of the second battery cell 102, and a difference between the SOC of the first battery cell 101 and the SOC of the second battery cell 102 is greater than a sixth preset threshold. The sixth preset threshold is generally 30% SOC, optionally 50% SOC. However, because different users have different definition requirements for the SOC, the sixth preset threshold may be selected according to an actual case. This is not limited in the present disclosure.

Based on the foregoing examples, the power supply device includes the energy pack and the power pack, and based on the preset condition, the energy pack and the power pack are selected for coordinated output to satisfy requirements of endurance mileage and power, improve energy efficiency of the power supply device, and reduce costs of the power supply device.

The power supply device disclosed in the present disclosure may quickly achieve, by combining first battery cells and second battery cells with different quantities of strings without changing a battery core surface density, a compaction density, and an envelope size, an agile design of power supply devices required by different entire vehicles. In addition, based on this, an energy density of the power supply device can be further maximized, and a difference between different power supply devices can be greatly reduced, to achieve a standardized design of the power supply device and greatly reduce costs of the power supply device.

In addition, the terms "first" and "second" are used merely for the purpose of description, and shall not be construed as indicating or implying relative importance or implying a quantity of indicated technical features. Therefore, features defined by "first" and "second" may explicitly or implicitly include at least one of the features. In the descriptions of the present disclosure, unless otherwise specified, "multiple" means two or more than two, for example, two or three.

In the descriptions of this specification, a description of a reference term such as "an example", "some examples", "an illustration", "a specific illustration", or "some illustrations" means that a specific feature, structure, material, or characteristic that is described with reference to the example or the illustration is included in at least one example or illustration of the present disclosure. In this specification, exemplary description of the foregoing terms does not necessarily refer to a same example or illustration. Moreover, the specific features, structures, materials, or characteristics described may be combined in any one or more examples or illustrations in a suitable manner. In addition, different examples or illustrations described in this specification, as well as features of different examples or illustrations, may be integrated and combined by a person skilled in the art without contradicting each other.

Although the examples of the present invention are shown and described above, it may be understood that the foregoing examples are illustrative, and cannot be understood as limitations to the present invention. A person of ordinary skill in the art may make changes, modifications, replacements, and variations to the foregoing examples without departing from the scope of the present invention.

## Claims

1. A power supply device, wherein the power supply device comprising a first battery cell (101) and a second battery cell (102), a ratio of a first parameter of the first battery cell (101) to a first parameter of the second battery cell (102) being greater than a first preset threshold, a ratio of a second parameter of the second battery cell (102) to a second parameter of the first battery cell (101) being greater than a second preset threshold, and the first preset threshold and the second preset threshold both being greater than 1; and
a capacity of the first battery cell (101) is greater than a capacity of the second battery cell (102), the first battery cell (101) and/or the second battery cell (102) discharging according to a preset rule,
wherein the preset rule comprises:
when a first preset condition is satisfied, only the first battery cell (101) discharging a load (104);
when a second preset condition is satisfied, the first battery cell (101) and the second battery cell (102) discharging together; and
when a third preset condition is satisfied, the first battery cell (101) charging the second battery cell (102) and discharging the load (104).

2. The power supply device according to claim 1, wherein the first preset threshold and the second preset threshold are greater than or equal to 1.5.

3. The power supply device according to claim 1 or 2, wherein the first battery cell (101) comprises at least one first battery core, and the second battery cell (102) comprises at least one second battery core, wherein the first battery core and the second battery core satisfy |V1-V2| > 0.1*V1 or |V1-V2| > 0.1*V2,
wherein a voltage of the first battery core is V1, and a voltage of the second battery core is V2.

4. The power supply device according to any one of claims 1 to 3, wherein the first battery cell (101) comprises a plurality of first battery cores, the plurality of first battery cores are of a first chemical system, the second battery cell (102) comprises a plurality of second battery cores, the plurality of second battery cores are of a second chemical system, and the first chemical system and the second chemical system are different.

5. The power supply device according to claim 4, wherein the first battery cell (101) is a lithium iron phosphate battery, and the second battery cell (102) is a lithium manganese oxide battery.

6. The power supply device according to claim 4, wherein the first battery cell (101) is a lithium iron phosphate-graphite battery, and the second battery cell (102) is a lithium metal battery.

7. The power supply device according to any one of claims 1 to 6, wherein the power supply device further comprising: a control circuit (103), both the first battery cell (101) and the second battery cell (102) being connected to the control circuit (103), to externally output through the control circuit (103); and the power supply device further comprises a controller (105), the controller (105) being connected to the control circuit (103) to control the first battery cell (101) and the second battery cell (102) to discharge according to the preset rule by controlling the control circuit (103).

8. The power supply device according to claim 7, wherein the control circuit (103) comprises a first switch tube (1031), a second switch tube (1032), and a first inductance (1033),
wherein a first positive output end (1011) of the first battery cell (101) is connected to a second negative output end (1022) of the second battery cell (102), a first negative output end (1012) of the first battery cell (101) is connected to a first end (10311) of the first switch tube and a load negative end (1042), a second positive output end (1021) of the second battery cell (102) is connected to a second end (10322) of the second switch tube and a load positive end (1041), an end of the first inductance (1033) is connected to the first positive output end (1011) and the second negative output end (1022), and another end of the first inductance (1033) is connected to a second end (10312) of the first switch tube and a first end (10321) of the second switch tube.

9. The power supply device according to claim 8, wherein when the first preset condition is satisfied, the controller (105) controls on-duty cycles of the first switch tube (1031) and the second switch tube (1032), and controls a voltage difference between the second positive output end (1021) and the second end (10322) of the second switch tube to be within a first preset range, to cause only the first battery cell (101) to discharge the load (104);
when the second preset condition is satisfied, the controller (105) controls the first switch tube (1031) and the second switch tube (1032) to be turned off, to cause the first battery cell (101) and the second battery cell (102) to discharge together;
when the third preset condition is satisfied, the controller (105) controls on-duty cycles of the first switch tube (1031) and the second switch tube (1032), and controls a voltage difference between the second positive output end (1021) and the second end (10322) of the second switch tube to be within a second preset range, to cause the first battery cell (101) to charge the second battery cell (102) and discharge the load (104); and
a maximum value of the first preset range is less than a minimum value of the second preset range.

10. The power supply device according to claim 9, wherein the first preset range is 0.1 V to 1 V, and the second preset range is above 1 V.

11. The power supply device according to any one of claims 1 to 10, wherein the power supply device comprising a plurality of battery cells, wherein one of the plurality of battery cells is the first battery cell (101), and the rest of the plurality of battery cells are the second battery cells (102);
or one of the plurality of battery cells is the second battery cell (102), and the rest of the plurality of battery cells are the first battery cells (101);
or some of the plurality of battery cells are the first battery cells (101), and the rest of the plurality of battery cells are the second battery cells (102).

12. The power supply device according to any one of claims 1 to 9, wherein the first parameter is a capacity, and a ratio of a first capacity of the first battery cell (101) to a second capacity of the second battery cell (102) is greater than the first preset threshold; and
the second parameter is a maximum rated pulse discharge rate, and a ratio of a maximum rated pulse discharge rate of the second battery cell (102) to a maximum rated pulse discharge rate of the first battery cell (101) is greater than the second preset threshold.

13. The power supply device according to claim 12, wherein the first preset condition is that a required power of the load (104) is less than a power outputted by the first battery cell (101) at the maximum rated pulse discharge rate, and/or a state of charge of the first battery cell (101) is greater than a state of charge of the second battery cell (102) and the state of charge of the second battery cell (102) is less than a third preset threshold;
the second preset condition is that the required power of the load (104) is greater than the power outputted by the first battery cell (101) at the maximum rated pulse discharge rate, and/or the state of charge of the first battery cell (101) and the state of charge of the second battery cell (102) are greater than a fourth preset threshold, and/or the state of charge of the first battery cell (101) and the state of charge of the second battery cell (102) are less than a fifth preset threshold; and
the third preset condition is that the state of charge of the first battery cell (101) is greater than the state of charge of the second battery cell (102), and a difference between the state of charge of the first battery cell (101) and the state of charge of the second battery cell (102) is greater than a sixth preset threshold,
wherein the maximum rated pulse discharge rate is a maximum discharge rate causing a voltage of the first battery cell (101) or a voltage of the second battery cell (102) to drop to a cut-off voltage within 10s.
